# EUROPÄISCHE PATENTSCHRIFT

(11) **EP 2 895 317 B1**
(45) Veröffentlichungstag und Bekanntmachung des Hinweises auf die Patenterteilung: **08.05.2019**
(21) Anmeldenummer: 13753876.5
(22) Anmeldetag: 02.09.2013
(51) Int. Cl.: B29C 70/38, B65H 23/025, F16C 13/02, B29C 33/04

(54) **SYSTEM ZUM ABLEGEN VON BAHNFÖRMIGEM HALBZEUG MIT EINER ANDRUCKROLLE**
SYSTEM FOR DEPOSITING WEB-SHAPED SEMI-FINISHED PRODUCT WITH PRESSURE ROLLER
SYSTÈME DESTINÉ À DÉPOSER UN DEMI-PRODUIT EN FORME DE BANDE AVEC ROULEAU PRESSEUR

(30) Priorität: 11.09.2012 DE 102012108487
(43) Veröffentlichungstag der Anmeldung: 22.07.2015
(73) Patentinhaber: AFPT GmbH, 56281 Dörth (DE)
(72) Erfinder: HOFFJANN, Lars, 56132 Frücht (DE); KÖLZER, Patrick, 56291 Mühlpfad (DE); KOK, Coert, 5161 Sprang-Capelle (NL)
(74) Vertreter: WSL Patentanwälte Partnerschaft mbB
(86) Internationale Anmeldenummer: PCT/EP2013/068064
(87) Internationale Veröffentlichungsnummer: WO 2014/040871

(56) Entgegenhaltungen:
- EP-A2- 0 396 216
- WO-A1-2007/076775
- WO-A1-2010/031364
- WO-A1-2010/091997
- DE-A1- 1 938 965
- DE-A1- 3 819 391
- US-A- 5 078 821

## Beschreibung

Die vorliegende Erfindung betrifft eine Andruckrolle zum Ablegen von bahnförmigem Halbzeug sowie ein Ablegesystem mit einer solchen Andruckrolle.

Faserverstärkte Kunststoffe erhalten aufgrund ihres niedrigen Gewichts und ihrer hohen Belastbarkeit eine immer größere Bedeutung bei der Herstellung von Bauteilen in allen möglichen Anwendungsgebieten, insbesondere aber im Flugzeugbau und Automobilbau.

Solche Faserverbundbauteile, die einen Anteil an Fasern und einen Anteil an Kunststoff als Matrix aufweisen, werden bisher überwiegend als duroplastische Faserverbundbauteile gefertigt, wobei als Kunststoff ein Duroplast zum Einsatz kommt.

Durch das Ersetzen des Duroplasts durch einen thermoplastischen Kunststoff ergeben sich neue Möglichkeiten für die Konzeption von Faserverbundbauteilen, jedoch auch neue Herausforderungen bei der Herstellung und Fertigung solcher Bauteile.

Häufig werden Faserverbundbauteile, insbesondere solche mit Thermoplasten als Kunststoffanteil, durch ein Einlegen von Halbzeugen in eine Form oder durch ein Umwickeln eines Kerns mit einem Halbzeug gefertigt. Als Halbzeug, welches häufig auch als Prepreg (aus dem Englischen preimpregnated) bezeichnet wird, werden mit einer Kunststoffmatrix vorimprägnierte Verstärkungsfasern verwendet.

Ein solches Halbzeug weist zum einen Verstärkungsfasern, beispielsweise Glas-, Basalt- oder Kohlenstofffasern, und zum anderen eine Kunststoffmatrix, in welche die Verstärkungsfasern eingebetet sind, auf. Beispiele für das Material der Kunststoffmatrix sind Polyethylen (PE), Polypropylen (PP), Polyamid (PA), Polyphenylensulfid (PPS) oder Polyetherketon (PEEK).

Eine Möglichkeit, um aus einem bahnförmigen thermoplastischen Halbzeug ein Faserverbundbauteil zu fertigen ist, ist es, das bahnförmige Halbzeug auf einer Form bzw. einem Kern unter gleichzeitiger Erwärmung des Halbzeugs abzulegen. Auf diese Weise nimmt das Halbzeug beim Ablegen zum einen die Kontur der Form an, zum anderen aber wird es auch mit weiteren Lagen des gleichen Halbzeugs verschweißt.

Um eine solche Erwärmung des abzulegenden Halbzeugs zu erreichen werden unter anderem Laser verwendet, welche das Halbzeug am Ort der Ablage durch Absorption der Laserstrahlung im Halbzeug selbst erwärmen.

Rotationssymmetrische Bauteile werden dabei in der sogenannten Wickeltechnik hergestellt, d. h. das Halbzeug wird auf einen Kern aufgewickelt. Flächige Bauteile hingegen werden durch Auflegen des Halbzeugs auf eine Form gefertigt. Im Sinne der vorliegenden Anmeldung werden sowohl das Wickeln als auch das Auflegen als Ablegen bezeichnet.

Beim Ablegen des Halbzeugs auf einer Form oder einem Kern muss ferner das Halbzeug gegen die Form bzw. den Kern gedrückt werden, damit das Halbzeug die Kontur des Kerns bzw. der Form annimmt und sich mit dem bereits abgelegten Material in Folge einer durch Abkühlung einhergehenden Erstarrung der Matrix zu einem Bauteil konsolidiert.

Bei der Herstellung von komplexen Bauteilen bestehen diese oft aus vielen Lagen des faserverstärkten Kunststoffs mit unterschiedlichem Wickelwinkel. Die Faserorientierung im Bauteil kann insbesondere dem Belastungsfall angepasst werden. Mit einer starren Andruckrolle mit einem zylindrischen Mantel, welcher die Andruckfläche bildet, wird das Halbzeug im schlimmsten Fall, d. h. beispielsweise beim Aufwickeln auf eine Kugel, nur punktförmig auf das Bauteil aufgedrückt. Im allgemeinen gilt, dass je stärker die Krümmung des Kerns oder der Form ist, auf welche das Halbzeug aufgebracht wird, je kleiner wird die Andruckfläche. Dies führt oft zu schlechter oder gar keiner Konsolidierung des Materials in den Randbereichen des bahnförmigen Materials oder Tapes.

Um eine gute Konsolidierung in den Randbereichen des Materials sicher zu stellen, werden im Stand der Technik Andruckrollen aus Elastomeren verwendet. Insbesondere findet hier Silikon als Elastomermaterial Verwendung. Diese Andruckrollen aus Elastomeren haben jedoch bei hohen Verarbeitungstemperaturen einen großen Verschleiß und müssen daher oft ausgetauscht werden. Ein störungsfreier Produktionsprozess ist hier nicht möglich.

Für Serienbauteile wurden daher bereits speziell geformte Andruckrollen entwickelt, die für einen gewissen Durchmesser- und Wickelwinkelbereich konstruiert sind und in diesem Bereich eine größere, jedoch linienförmige Andruckfläche bereitstellen und daher eine gute Konsolidierung des Materials über seine gesamte Breite ermöglichen.

Die DE 1938965 offenbart eine Walze für die Druckbehandlung von Warenbahnen, die mit einer Gummischicht umgeben ist, welche die andrückende Fläche der Walze bildet.

Zudem ist aus der WO 2010/091997 A1 eine Anpressvorrichtung zum Anpressen von faserverstärkten thermoplastischen Materialien offenbart, die einen Grundkörper und eine an einer Oberfläche des Grundkörpers vorgesehen Anpressschicht aufweist. Die Anpressschicht ist hierbei mit einem anorganischen Material, vorzugsweise einem Keramikmaterial, ausgebildet und weist aufgrund ihrer Struktur eine Flexibilität auf, die es ihr erlaubt, sich an die Kontur einer Form anzupassen.

Das Patent US 5,078,821 offenbart ein unter Druck stehendes Rohr als Andruckrolle, welches eine innere Blase zur Druckbeaufschlagung aufweist. Die Blase wiederum ist von einer metallischen Halteeinrichtung umgeben, welche eine Verformung ähnlich einem faserverstärkten elastomeren Reifen zeigt. Die äußere Oberfläche des Rohrs wird von einem metallischen Mantel gebildet, der in Eingriff mit dem abzulegenden thermoplastischen Material kommt.

Die internationale Patentanmeldung WO2010/031 364 A1 offenbart ein Andruckkissen mit einer mit Druckluft beaufschlagten Luftkammer, wobei das Andruckkissen aus einem Grundmaterial aus Silikon besteht und auf der Mantelfläche des Grundmaterials eine Kautschukschicht und auf der äußeren Mantelfläche der Kautschukschicht wiederum ein Metallgewebe aufgebracht ist.

Demgegenüber ist es Aufgabe der vorliegenden Erfindung eine Andruckrolle zum Ablegen von bahnförmigem Halbzeug bereitzustellen, welche verschleißarm ist und trotzdem die herkömmlichen Anforderungen an eine Andruckrolle erfüllt.

Erfindungsgemäß wird diese Aufgabe dadurch gelöst, dass ein Ablegesystem zum Ablegen von bahnförmigem Halbzeug mit einer eine Andruckrolle zum Ablegen des bahnförmigen Halbzeugs bereitgestellt wird mit einer Welle zur drehbaren Lagerung der Andruckrolle, einem zumindest abschnittsweise elastisch verformbaren hohlzylindrischen Mantel und zwei sich von der Welle radial nach außen erstreckenden Abstandshalter, wobei der Mantel von den Abstandshaltern derart in einem Abstand zu der Welle gehalten wird, dass sich der Mantel zwischen den Abstandshaltern und konzentrisch um die Welle erstreckt, so dass die Abstandshalter die Deckelflächen des von dem Mantel gebildeten Hohlzylinders bilden und der Mantel und die Abstandshalter einen Innenraum der Andruckrolle begrenzen, wobei der Mantel aus einem Metallblech hergestellt ist und der Mantel eine Mantelfläche aufweist, die die anzudrückende Fläche der Andruckrolle bildet und wobei der Mantel an seinen in axialer Richtung ersten und zweiten Enden jeweils einen sich radial nach innen erstreckenden Kragen aufweist, wobei jeder der Kragen jeweils mit einem Abstandshalter verbunden ist.

Eine solche Andruckrolle, bei welcher die andrückende Fläche von einer elastisch verformbaren hohlzylindrischen Mantelfläche der Rolle gebildet wird, weist den Vorteil auf, dass sich die Rolle elastisch an die Kontur der Form bzw. des Kerns, auf dem das bahnförmige Halbzeug abgelegt werden soll, anpasst. Gleichzeitig lässt sich der Mantel aus einem verschleißarmen Material fertigen.

Wenn in der vorliegenden Anmeldung von "radial" gesprochen wird, so bezeichnet dies eine Richtung senkrecht zur Welle bzw. Drehachse der Andruckrolle. Wird hingegen von einer "axialen" Richtung gesprochen, so bezeichnet dies eine Richtung parallel zur Drehachse bzw. Welle der Andruckrolle.

Unter einem bahnförmigen Halbzeug wird im Sinne der vorliegenden Anmeldung ein Halbzeug verstanden, welches in einer Richtung eine erheblich größere Erstreckung aufweist als in den anderen Richtungen, so dass es auf Rollen oder Spulen aufgewickelt und im Produktionsprozess von diesen abgezogen werden kann. Ein derartiges Halbzeug kann beispielsweise in Form eines Strangs oder eines Bandes vorliegen, wobei der Querschnitt des Halbzeugs nicht auf irgendwelche bestimmten Formen beschränkt ist. Typische Querschnittsformen sind jedoch rund, rechteckig oder quadratisch.

In einer Ausführungsform der Erfindung weist der elastisch verformbare Abschnitt des Mantels eine Wandstärke in einem Bereich von 0,1 mm bis 2 mm, vorzugsweise in einem Bereich von 0,25 mm bis 1 mm besonders bevorzugt von 0,4 mm auf.

Da der Abstandshalter einen Abstand zwischen dem hohlzylindrischen Mantel und der Welle, mit welcher die Andruckrolle drehbar gehalten werden kann, definiert, ist die elastische Verformbarkeit des hohlzylindrischen Mantels gewährleistet und begrenzt.

Dabei weist die Andruckrolle zwei Abstandshalter auf, und der Mantel erstreckt sich zwischen den beiden Abstandshaltern derart, dass die Abstandshalter die Deckelflächen des von dem Mantel gebildeten Hohlzylinders bilden und der Mantel und die Abstandshalter zusammen einen Innenraum der Andruckrolle begrenzen.

Dabei weist der Mantel an seinen in axialer Richtung ersten und zweiten Enden jeweils einen sich radial nach innen erstreckenden Kragen auf, wobei jeder der Kragen jeweils mit einem Abstandshalter verbunden ist.

In einer solchen Ausgestaltung lässt sich der hohlzylindrische Mantel zwischen den Abstandshaltern einspannen und an diesen befestigen. Dabei ist vorzugsweise der Mantel sowie die sich radial nach innen erstreckenden Kragen an seinen axialen Enden einstückig ausgeführt.

Eine solche einstückige Ausführung der Kragen und des Mantels lässt sich dadurch realisieren, dass der Mantel mit dem Kragen aus einem massiven Hohlzylinder, welcher zumindest eine Wandstärke aufweist, die der radialen Erstreckung des Kragens ausgehend von der Außenfläche des Mantels entspricht, gefertigt, d. h. insbesondere gedreht, gefräst oder erodiert, wird.

In einer Ausführungsform der Erfindung ist radial in Richtung der Welle von dem Mantel beabstandet ein Anschlagelement vorgesehen, welches einen Anschlag für die elastische Verformung des Mantels bildet. Auf diese Weise wird die elastische Verformung des Mantels derart begrenzt, dass die Verformung keine Beschädigung des Mantels hervorrufen kann.

In einer Ausführungsform der Erfindung weist das Anschlagelement einen radialen Abstand von dem Mantel in einem Bereich von 0,5 mm bis 5 mm und vorzugsweise von 1 mm auf. Dabei ist davon auszugehen, dass der Abstand zwischen dem Mantel und dem Anschlagelement in axialer Richtung konstant ist, so dass der angegebene Wertebereich verschiedene Ausführungsformen betrifft.

Auf diese Weise wird ein Ringspalt zwischen Mantel und Abstandshalter gebildet, welcher in weiteren Ausführungsformen zur Führung eines Kühlfluids verwendet werden kann, welches den Mantel der Andruckrolle kühlt. Dabei erstreckt sich der Ringspalt in einer Ausführungsform in axialer Richtung über den ganzen elastisch verformbaren Abschnitt des Mantels.

In einer Ausführungsform der Erfindung ist die Welle der Andruckrolle zumindest abschnittsweise eine Hohlwelle mit einem ersten in axialer Richtung verlaufenden Kanal, der in radialer Richtung mit dem Innenraum der Andruckrolle verbunden ist, zum Zuführen eines Fluids in einen Innenraum der Andruckrolle und einem zweiten in axialer Richtung verlaufenden Kanal, der in radialer Richtung mit dem Innenraum der Andruckrolle verbunden ist, zum Abführen eines Fluids aus dem Innenraum.

Auf diese Weise lässt sich eine Andruckrolle realisieren, bei welcher der Mantel durch ein vorbeiströmendes Fluid temperierbar, d.h. insbesondere kühlbar, ist.

Unter einem Fluid, welches im Sinne der vorliegenden Erfindung zum Temperieren des Mantels geeignet ist, versteht man insbesondere ein Gas, insbesondere Druckluft, oder eine Flüssigkeit, insbesondere Öl oder Wasser.

Dabei ist eine Ausführungsform der Erfindung bevorzugt, bei welcher sich der erste axial verlaufende Kanal der Welle von einem ersten Ende der Welle aus in diese hinein erstreckt und sich der zweite axial verlaufende Kanal von dem entgegengesetzten Ende der Welle aus in diese hinein erstreckt. Dabei sind die beiden Kanäle insbesondere als Sacklöcher ausgeführt und jeweils über in radialer Richtung verlaufende Kanalabschnitte mit dem Innenraum der Andruckrolle verbunden. Auf diese Weise lässt sich durch den einen Kanal Fluid zuführen, während es durch den anderen Kanal abgeführt werden kann.

In einer Ausführungsform der Erfindung weist die Andruckrolle einen Fluidkanal auf mit einem ersten radialen Abschnitt, der sich von dem ersten Kanal der Welle radial nach außen zu einer Innenfläche des Mantels erstreckt, mit mindestens einem axialen Abschnitt, der sich von einem radial außenliegenden Ende des ersten radialen Abschnitts aus axial erstreckt, wobei die Innenfläche des Mantels eine Wand des axialen Abschnitts bildet, und mit mindestens einem zweiten radialen Abschnitt, der sich von der Innenfläche des Mantels radial nach innen zu dem zweiten Kanal der Welle erstreckt.

Auf diese Weise wird ein Fluidkanal realisiert, der es ermöglicht, ein durch die Welle in den Innenraum der Andruckrolle einströmendes Fluid radial nach außen zu dem Mantel, an diesem entlang und wieder zurück zu dem zweiten Kanal der Welle zu führen. Auf diese Weise wird eine effektive Kühlung des Mantels bereitgestellt.

Zumindest Abschnitte eines solchen Fluidkanals können in einer Ausführungsform der Erfindung dadurch realisiert werden, dass die Andruckrolle einen sich radial von der Welle nach außen erstreckenden Kern aufweist, der gegen die Welle gedichtet ist und der mindestens einen sich radial nach außen erstreckenden Durchbruch aufweist, der zumindest einen Teil des ersten radialen Abschnitts des Fluidkanals bildet und der mit dem ersten Kanal der Welle verbunden ist.

Darüber hinaus kann in einer Ausführungsform der Erfindung mindestens ein weiterer Abschnitt des Fluidkanals dadurch bereitgestellt werden, dass die Andruckrolle einen zu dem Mantel konzentrischen, radial nach innen von dem Mantel beabstandeten Kühlring aufweist, wobei der Kühlring mindestens einen sich radial erstreckenden ersten Durchbruch aufweist und der Kühlring derart gegen den Kern gedichtet ist, dass der sich radial erstreckende Durchbruch des Kerns und der sich radial erstreckende Durchbruch des Kühlrings zusammen den ersten radialen Abschnitt des Fluidkanals bilden.

In einer solchen Ausführungsform der Erfindung bildet der Kühlring jedoch nicht nur einen Teil des ersten radialen Abschnitts des Fluidkanals sondern vorzugsweise auch zusammen mit dem Mantel den axialen Abschnitt des Fluidkanals.

Darüber hinaus kann der Kühlring als Anschlagelement für den elastisch verformbaren Mantel dienen, so wie dies zuvor ausgeführt wurde.

In einer Ausführungsform der Erfindung weist der Kühlring mindestens einen sich radial erstreckenden zweiten Durchbruch auf, der in ein erstes Volumen mündet, das von dem Kern einerseits und einem ersten Abstandshalter andererseits begrenzt wird und das mit dem zweiten Kanal der Welle verbunden ist.

Auf diese Weise bilden der sich radial erstreckende zweite Durchbruch des Kühlrings sowie das von dem Kern einerseits und dem ersten Abstandshalter andererseits begrenzte Volumen zusammen den zweiten sich radial erstreckenden Abschnitt des Fluidkanals.

In einer Ausführungsform der Erfindung ist der Kern in axialer Richtung derart angeordnet, dass zwei axiale Abschnitte des Fluidkanals gebildet werden und der Kühlring mindestens einen zweiten radialen Durchbruch aufweist, der in ein zweites Volumen mündet, das von dem Kern einerseits und einem zweiten Abstandshalter andererseits begrenzt wird.

Auf diese Weise wird beispielsweise eine Zuführung des Fluids in einer zentralen Position von der Welle zu dem Mantel bereitgestellt, wobei das Fluid bei Erreichen des Mantels in zwei axialen Richtungen am Mantel vorbeiströmt und dann auf zwei Wegen in radialer Richtung zurück zur Welle strömt.

Dabei ist es vorteilhaft, wenn der Kern mindestens einen sich axial erstreckenden Durchbruch aufweist, der das erste Volumen, das von dem Kern einerseits und dem ersten Abstandshalter andererseits begrenzt wird, und das zweite Volumen, das von dem Kern einerseits und dem zweiten Abstandshalter andererseits begrenzt wird, verbindet.

Auf diese Weise können die beiden radialen, den Rückfluss des Kühlfluids von dem Mantel zu der Welle gewährleistenden Abschnitte des Fluidkanals mit dem gleichen Anschluss eines sich axial in der Welle erstreckenden Kanals verbunden werden.

In einer Ausführungsform weist das Ablegesystem ein Heizsystem auf, das so eingerichtet ist, dass es im Betrieb ein vorzugsweise thermoplastisches Halbzeug im Bereich vor oder an der Andruckrolle, d.h. in der Prozesszone, erwärmt. Beispiele für ein derartiges Heizsystem sind beispielsweise eine Einrichtung zum Erzeugen einer offenen Flamme, eine Einrichtung zum Erzeugen eines Heizgasstrahls, aber auch Infrarot- oder Mikrowellenstrahlungsquellen. In einer Ausführungsform ist das Heizsystem ein Laser, der so eingerichtet ist, dass er im Betrieb ein Halbzeug im Bereich vor oder an der Druckrolle, d. h. in der Prozesszone, bestrahlt.

Weitere Vorteile, Merkmale und Anwendungsmöglichkeiten der vorliegenden Erfindung werden anhand der folgenden Beschreibung einer Ausführungsform und der dazugehörigen Figuren deutlich.
Figur 1 zeigt eine schematische Ansicht einer Anordnung zum Aufwickeln eines thermoplastischen Halbzeugs auf einen Kern.
Figur 2 zeigt eine schematische Ansicht einer Anordnung zum Auflegen eines bahnförmigem Halbzeugs auf eine Form.
Figur 3 zeigt eine perspektivische Schnittansicht durch eine Ausführungsform der erfindungsgemäßen Andruckrolle.
Figur 4 zeigt eine weggebrochene perspektivische Ansicht des Mantels sowie der Abstandhalter der Andruckrolle aus Figur 3.
Figur 5 zeigt eine weggebrochene perspektivische Ansicht der Andruckrolle aus Figur 3.
Figur 6 zeigt eine perspektivische Ansicht des Kerns der Andruckrolle aus Figur 3.
Figur 7 zeigt eine perspektivische Ansicht des Kühlrings der Andruckrolle aus Figur 3.

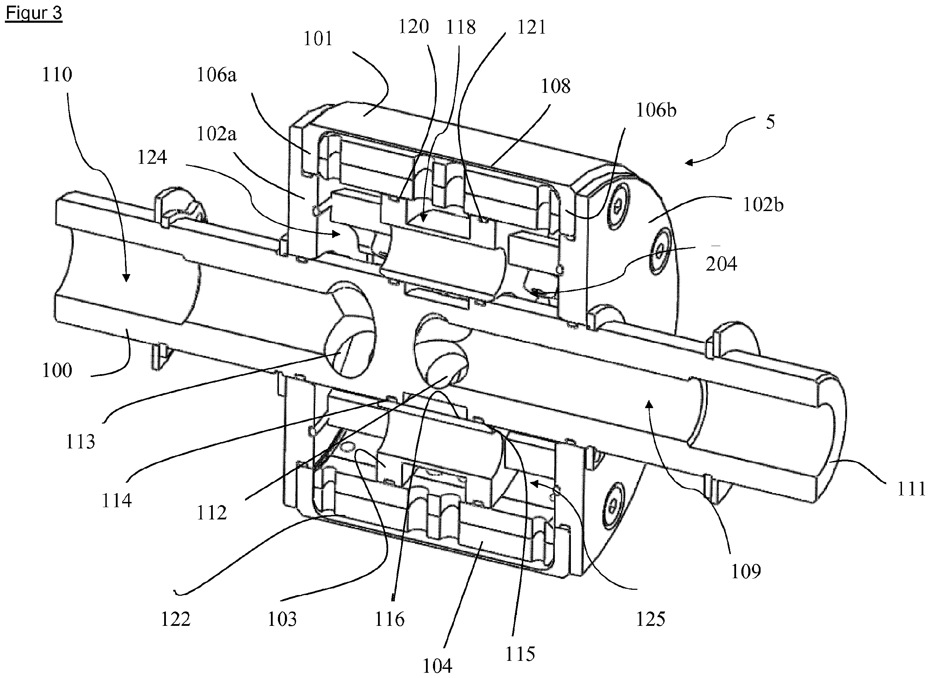

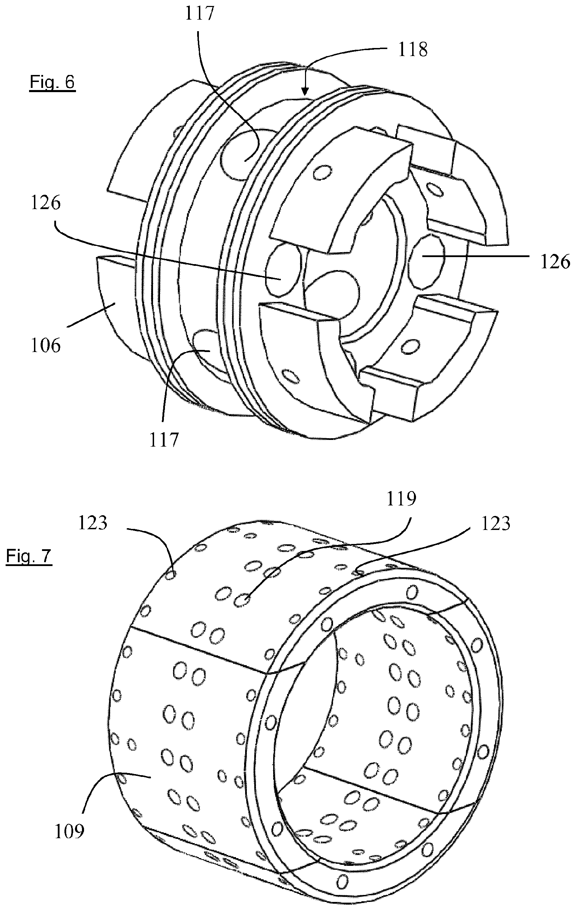

Figur 6 zeigt eine perspektivische Ansicht des Kerns der Andruckrolle aus Figur 3.
Figur 7 zeigt eine perspektivische Ansicht des Kühlrings der Andruckrolle aus Figur 3.

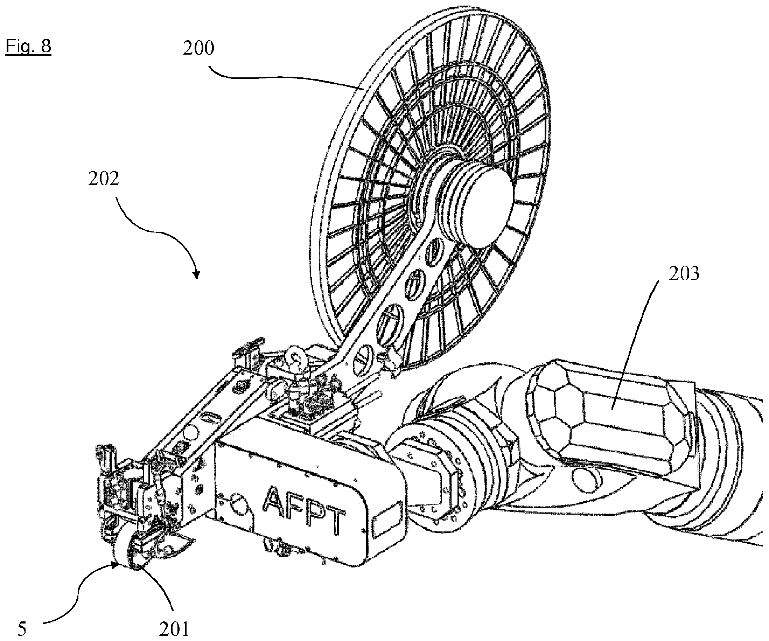

Figur 8 zeigt eine weggebrochene perspektivische Ansicht eines Ablegesystems mit einer Andruckrolle gemäß Figur 3.

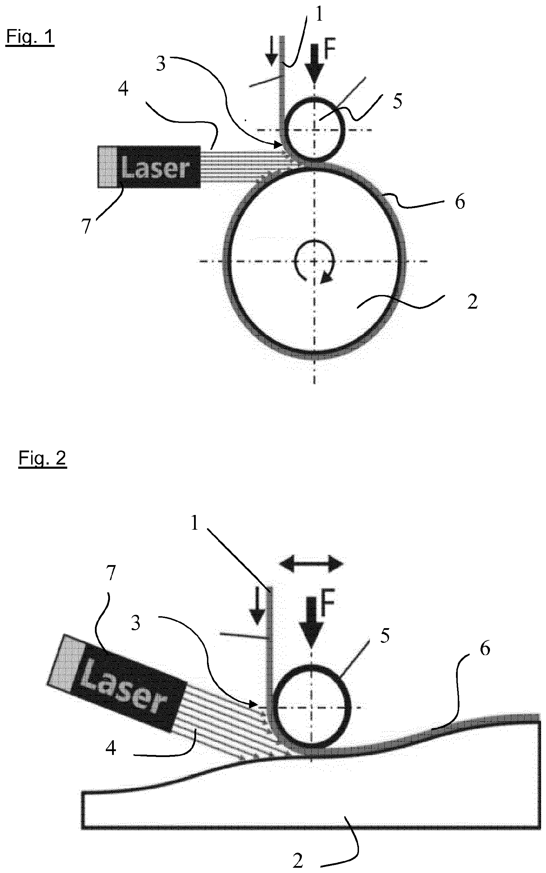

Figur 1 zeigt eine schematische Schnittansicht durch eine Anordnung zum Wickeln eines bahnförmigen Halbzeugs 1 auf einen formgebenden Kern 2. Dabei handelt es sich bei dem bahnförmigen Halbzeug 1 um ein thermoplastisches Prepregmaterial mit einer Matrix aus einem thermoplastischen Kunststoff und Verstärkungsfasern, hier Kohlenstofffasern.

Der Kern 2, auf dem das Halbzeug 1 aufgewickelt wird, ist beispielsweise eine verlorene Form zum Herstellen eines Druckbehälters. Das bahnförmige Halbzeug 1 wird von einer Vorratsspule abgezogen und der Prozesszone 3 zugeführt. In der Prozesszone 3, d. h. unmittelbar vor dem Wickeln des Halbzeugs 1 auf den Kern 2 wird dieses mit Hilfe von Laserstrahlung 4, die von dem Halbzeug 1 selbst absorbiert wird, erwärmt und dann im erwärmten Zustand mit Hilfe einer Andruckrolle 5 gegen den Kern 2 gedrückt, sodass das aufgeschmolzene Material des Halbzeugs die Form des Kerns annimmt. Die Laserstrahlung wird von einem Laser 7 bereitgestellt und auf die Prozesszone 3 gestrahlt. Durch das Aufschmelzen wird das Halbzeug 1 nicht nur plastisch verformbar, sondern das Material wird auch mit darunterliegenden Materialbahnen (in der Darstellung aus Figur 1 nicht gezeigt) verschmolzen. Hinter der Prozesszone 3 ist aus dem Halbzeug 1 der verarbeitete faserverstärkte Kunststoff 6 geworden, welcher das Kunststoffformteil bildet.

Ähnlich wie das Aufwickeln des Halbzeugs 1 auf den Kern 2 aus Figur 1 kann das Halbzeug alternativ auch auf eine Form 2' aufgelegt werden, so dass das fertig verarbeitete Material 6 dann von der Form 2' abgenommen werden kann und dessen Kontur aufweist.

In Figur 2 ist eine solche Anordnung zum Ablegen des Halbzeugs 1 dargestellt. Wie zuvor besteht die Anordnung im Wesentlichen aus einer Andruckrolle 5, welche das Halbzeug 1 gegen die Form 2' drückt. In der Prozesszone 3 wird das Halbzeug wieder von Laserstrahlung 4, welche mit Hilfe eines Lasers 7 erzeugt wird, erwärmt.

Die weitere Beschreibung beschäftigt sich nun mit einer speziellen, erfindungsgemäßen Ausgestaltung der Andruckrolle 5, sowie sie in den Anordnungen der Figuren 3 bis 8 dargestellt ist.

Figur 3 zeigt eine perspektivische Schnittansicht der erfindungsgemäßen Andruckrolle 5. Deutlich zu erkennen sind in Figur 3 die wesentlichen Bestandteile der Andruckrolle 5, nämlich eine Welle 100 zur drehbaren Lagerung der Andruckrolle 5, ein elastisch verformbarer hohlzylindrischer Mantel 101, zwei Abstandshalter 102a, 102b, welche den Mantel 101 derart in einem Abstand zur Welle 100 halten, dass sich der Mantel 101 konzentrisch um die Welle 100 erstreckt. Darüber hinaus weist die Andruckrolle 5 in ihrem Inneren einen Kern 103 sowie einen Kühlring 104 auf.

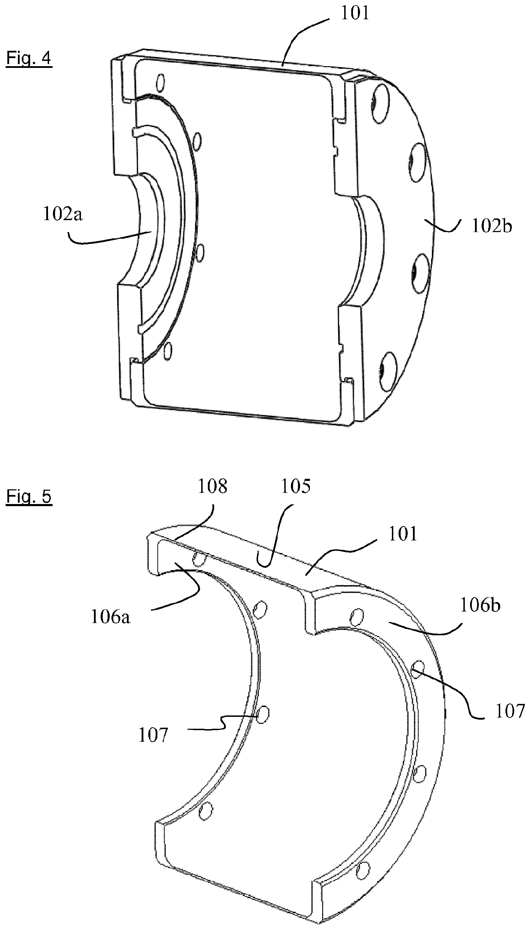

Die Figuren 4 und 5 zeigen weggebrochene perspektivische Ansichten der Kombination aus Abstandshalter 102a, 102b und Mantel 101 (Figur 4) bzw. des Mantels 101 alleine (Figur 5).

Der Mantel 101 besteht im Wesentlichen aus Stahlblech, so dass seine Mantelaußenfläche 105 elastisch verformbar ist. Diese Verformbarkeit des Mantels 101 ist zum einen der Materialeigenschaft des dünnen Bleches geschuldet, zum anderen aber der Halterung des Mantels 101 zwischen den beiden Abstandshaltern 102a, 102b, welche den Mantel einspannen. Um den Mantel 101 zwischen den Abstandshaltern 102a, 102b einspannen zu können, weist der Mantel 101 zwei einstückig mit diesem verbundene Kragen 106a, 106b auf, die sich ausgehend von der Mantelaußenfläche 105 in radialer Richtung nach innen erstrecken und die mit Befestigungsbohrungen 107 versehen sind, so dass der Mantel über seine Kragen 106a, 106b mit den Abstandshaltern 102a bzw. 102b verschraubbar ist.

Um einen solchen einstückigen Mantel mit zwei Kragen 106a, 106b und einem sich zwischen diesem Kragen 106a, 106b erstreckenden verformbaren Abschnitt 108 herstellen zu können, wird dieser aus einem massiven Hohlzylinder gedreht.

Trotz der Zugspannung, welche die Abstandshalter 102a, 102b im montierten Zustand auf den Mantel 101 und insbesondere auf seinen verformbaren Abschnitt 108 ausüben, könnte ein übermäßiger Druck, welcher auf dem verformbaren Abschnitt 108 des Mantels ausgeübt wird, zu einer plastischen und daher nicht mehr in ihre Ausgangsstellung zurückkehrenden Verformung des Mantels 101 führen. Damit einhergehen würde eine Beschädigung des Mantels 101. Um diese zu verhindern, ist der im Innenraum 126 der Andruckrolle 5 angeordnete Kühlring 104, wie der Darstellung aus Figur 3 deutlich zu entnehmen, konzentrisch zum Mantel 101, d. h. insbesondere konzentrisch zu dessen elastisch verformbaren Abschnitt 108, in einem Abstand von nur etwa 1 mm angeordnet. Das heißt bei einer Verformung des elastischen Abschnitts 108 des Mantels 101 ist dessen Verformung auf eine Auslenkung von etwa 1 mm in radialer Richtung begrenzt, so dass Beschädigungen des Mantels nicht auftreten können.

In diesem Sinne erfüllt der Kühlring 104 auch die Aufgabe eines Anschlagelementes für eine elastische Verformung des Mantels.

Die Wanddicke des Mantels 101 in seinem elastisch verformbaren Abschnitt 108 beträgt in der dargestellten Ausführungsform etwa 0,4 mm.

Der Kühlring 104 ist in Figur 7 im zusammengesetzten, aber im nicht eingebauten Zustand perspektivisch dargestellt.

Eine ebenfalls perspektivische Darstellung des Kerns 103 findet sich in Figur 6. Die gewählte Konstruktion der Andruckrolle 5 mit Kühlring 104 und Kern 103 in ihrem Innenraum 126 ermöglicht es, den Mantel 101 und insbesondere dessen elastisch verformbaren Abschnitt 108 während des Betriebs der Andruckrolle 5 zu kühlen.

Wie gemäß den Darstellungen der Figuren 1 und 2 gezeigt weist das abzulegende Halbzeug in dem Bereich, in dem es mit der Andruckrolle 5 in Eingriff kommt, um gegen den Kern oder die Form gedrückt zu werden, eine mit Hilfe des Lasers deutlich erhöhte Temperatur auf. Um zu verhindern, dass Teile des Matrixmaterials des Halbzeugs an der Andruckrolle 5 anhaften, empfiehlt sich eine Kühlung der Rolle, so wie sie gemäß der dargestellten Ausführungsform realisiert ist.

Dazu ist in der dargestellten Ausführungsform ein Kühlkanal realisiert, welcher ausgehend von der Welle 100 einen Strom eines Kühlfluids, hier insbesondere Druckluft, zunächst in radialer Richtung nach außen bis zum Erreichen des Mantels 101, dann in axialer Richtung entlang des Mantels 101 und wieder in radialer Richtung zurück zur Welle 100 ermöglicht.

Im Folgenden wird ausgeführt, wie ein solcher Kühlmittelkanal durch die Elemente Welle 100, Kern 103 und Kühlring 104 realisiert ist.

Wie der Figur 3 zu entnehmen ist, ist die Welle 100 eine Hohlwelle mit zwei in axialer Richtung verlaufenden Kanälen 109, 110. Der axiale Kanal 109 der Welle 100 erstreckt sich ausgehend von deren ersten Ende 111 bis in etwa zur axialen Mitte der Andruckrolle 5 und weist dort einen in radialer Richtung verlaufenden Verbindungsabschnitt 112 auf, über den der axiale Kanal 109 der Welle 100 mit dem Innenraum 126 der Andruckrolle 5 in Verbindung steht. Der zweite axiale Kanal 110 der Welle 100 ist vom ersten axialen Kanal 109 getrennt. Auch der zweite axiale Kanal 110 steht über einen radialen Verbindungsabschnitt 113 mit dem Innenraum 126 der Andruckrolle 5 in Verbindung.

Während in der gezeigten Ausführungsform der axiale Kanal 109 der Welle einer Zuführung eines Kühlfluids dient, dient der zweite axiale Kanal 110 der Abführung des Kühlfluids.

Der Kern 103 ist ebenfalls in der axialen Mitte der Andruckrolle 5 angeordnet und dort auf die Welle 100 gedichtet aufgesetzt. Zur Abdichtung des Kerns 103 gegenüber der Welle sind zwei umlaufende Dichtringe 114 bzw. 115 zwischen der Welle und dem Kern vorgesehen.

Fluid, welches aus der Welle 100 austritt, verteilt sich in Umfangsrichtung um die Welle herum in einer Verteilernut 116. Der Kern wiederum weist wie der Darstellung aus Figur 6 gut zu entnehmen ist in radialer Richtung verlaufende Durchbrüche 117 auf, die auf einer ersten Seite mit der Verteilernut 116 der Welle in Verbindung stehen und auf ihrer zweiten, radial außen liegenden Seite mit einem Ringraum 118. Durch diese radialen Durchbrüche 117 wird ein erster Teil eines sich in radialer Richtung erstreckenden Kühlkanalabschnitts gebildet.

Der Kern 103 wiederum ist gegen den Kühlring 104 gedichtet und Fluid, welches in den Ringraum 118 eintritt wird über Durchbrüche 119, die sich zwischen den Dichtungen 120 bzw. 121 zwischen Kern 103 und Kühlring 104 befinden, in radialer Richtung weitergeleitet. Die radialen Durchbrüche 119 des Kühlrings 104 sind gut in der Darstellung aus Figur 7 zu erkennen. Diese radialen Durchbrüche 119 des Kühlrings 104 bilden einen zweiten Teil eines ersten radialen Abschnitts des Fluidkanals zum Führen eines Kühlfluids. Die radialen Durchbrüche 119 des Kühlrings 104 münden in den bereits zuvor diskutierten Ringspalt 122 zwischen dem elastisch verformbaren Abschnitt 108 des Mantels 101 und dem Kühlring 104. In diesem Ringspalt 122 verteilt sich das Kühlfluid in Umfangsrichtung des Mantels 101. Darüber hinaus strömt das Kühlfluid in axialer Richtung durch den Ringspalt 122 an der Innenwand des Mantels 101 vorbei und kühlt diesen auf diese Weise.

Ausgehend von den wesentlichen mittig aus dem Kühlring 104 austretenden radialen Durchbrüchen 119 des Kühlrings 104 bilden sich somit zwei im Wesentlichen axiale Abschnitte des Fluidkanals aus, d. h. zum einen in Richtung des ersten Kragens 106a des Mantels 101 und zum anderen in Richtung des zweiten Kragens 106b des Mantels 101.

Kühlfluid, welches die Kragen 106a, 106b erreicht tritt von dort aus seinen Rückweg zur Welle 100 an. Dieser Rückweg des Fluids von der Innenwand des Mantels 101 erfolgt durch zweite Durchbrüche 123, die in radialer Richtung in dem Kühlring 104 angeordnet sind. Diese radialen Durchbrüche 123 des Kühlrings 104 bilden einen ersten Teil eines zweiten radialen Abschnitts des Fluidkanals in der Andruckrolle 5.

Aus den radialen Durchbrüchen 123 des Kühlrings 104 strömt das Fluid in zwei Innenvolumina 124, 125 innerhalb des Innenraums 126 der Andruckrolle 5. Diese Volumina 124, 125 werden von dem Kern 103, der Welle 100 und im einen Fall von dem Abstandshalter 102a und im anderen Fall von dem Abstandshalter 102b begrenzt. Durch diese Volumina 124, 125 kann ein Strom des Kühlfluids in radialer Richtung auf die Welle hin erfolgen. Während das Volumen 124 in direkter Fluidverbindung mit dem zweiten axialen Kanal 110 der Welle 100 steht, ist dies für das zweite Volumen 125 nicht der Fall. Damit das Fluid aus dem zweiten Volumen trotzdem über den zweiten Kanal 110 der Welle 100 abfließen kann, weist der Kern axiale Durchbrüche 126 auf, die das zweite Volumen 125 mit dem ersten Volumen 124 und somit mit dem zweiten Kanal 110 der Welle 100 verbinden.

Auf diese Weise ist ein geschlossener Kühlmittelstrom durch die Welle, in radialer Richtung nach außen zum Mantel, in zwei axial entgegengesetzten Richtungen zu den Abstandshaltern und in radialer Richtung zurück zur Welle und durch diese hinaus gewährleistet.

Figur 8 zeigt noch eine weggebrochene Darstellung eines erfindungsgemäßen Ablegesystems mit der zuvor beschriebenen Andruckrolle 5. Deutlich erkennbar ist die Vorrats- oder Abziehspule 200 für das Halbzeug, von der aus das Halbzeug der Prozesszone 201 im Bereich der Andruckrolle 5 zugeführt wird.

Das gesamte Ablegesystem 202 ist auf einem Roboterarm 203 montiert, so dass das Ablegesystem über eine Form geführt werden kann oder auch um einen Kern herum.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### BEZUGSZEICHENLISTE

- 1: Halbzeug
- 2: formgebender Kern
- 2': Form
- 3, 201: Prozesszone
- 4: Laserstrahlung
- 5: Andruckrolle
- 6: Kunststoff, Material
- 7: Laser
- 100: Welle
- 101: Mantel
- 102a, 102b: Abstandshalter
- 103: Kern der Andruckrolle 5
- 104: Kühlring
- 105: Mantelaußenfläche
- 106a, 106b: Kragen
- 107: Befestigungsbohrungen
- 108: elastisch verformbarer Abschnitt
- 109, 110: axialer Kanal der Welle
- 111: Ende
- 112, 113: Verbindungsabschnitt
- 114, 115: Dichtring
- 116: Verteilernut
- 117, 119, 123, 126: Durchbruch
- 118: Ringspalt
- 120, 121: Dichtring
- 122: Ringspalt
- 124, 125: Volumen
- 126: Innenraum der Andruckrolle
- 200: Vorrats- oder Abziehspule
- 202: Ablegesystem
- 203: Roboterarm

## Patentansprüche

1. Ablegesystem (202) zum Ablegen von bahnförmigem Halbzeug mit einer Andruckrolle (5) zum Ablegen des bahnförmigen Halbzeugs (1) mit
einer Welle (100) zur drehbaren Lagerung der Andruckrolle (5),
einem zumindest abschnittsweise elastisch verformbaren hohlzylindrischen Mantel (101) und
zwei sich von der Welle (100) radial nach außen erstreckenden Abstandshalter (102a, 102b),
wobei der Mantel (101) von den Abstandshaltern (102a, 102b) derart in einem Abstand zu der Welle (100) gehalten wird, dass sich der Mantel (101) zwischen den Abstandshaltern (102a, 102b) und konzentrisch um die Welle (100) erstreckt, so dass die Abstandshalter (102a, 102b) die Deckelflächen des von dem Mantel (101) gebildeten Hohlzylinders bilden und der Mantel (101) und die Abstandshalter (102a, 102b) einen Innenraum (108) der Andruckrolle (5) begrenzen,
wobei der Mantel (101) aus einem Metallblech hergestellt ist und der Mantel (101) eine Mantelfläche (105) aufweist, die die andrückende Fläche der Andruckrolle (5) bildet, **dadurch gekennzeichnet, dass** der Mantel (101) an seinen in axialer Richtung ersten und zweiten Enden (111) jeweils einen sich radial nach innen erstreckenden Kragen (106a, 106b) aufweist, wobei jeder der Kragen (106a, 106b) jeweils mit einem Abstandshalter (102a, 102b) verbunden ist.

2. Ablegesystem (202) nach Anspruch 1, **dadurch gekennzeichnet, dass** der Mantel (101) eine Wandstärke in einem Bereich von 0,1 mm bis 2 mm, vorzugsweise in einem Bereich von 0,25 mm bis 1 mm und besonders bevorzugt von 0,4 mm aufweist.

3. Ablegesystem (202) nach einem der Ansprüche 1 oder 2, **dadurch gekennzeichnet, dass** radial in Richtung der Welle (100) von dem Mantel (101) beabstandet ein Anschlagelement vorgesehen ist, welches einen Anschlag für die elastische Verformung des Mantels bildet.

4. Ablegesystem (202) nach Anspruch 3, **dadurch gekennzeichnet, dass** der Abstandshalter (102a, 102b) einen radialen Abstand von dem Mantel (101) in einem Bereich von 0,5 mm bis 5 mm und vorzugsweise von 1 mm aufweist.

5. Ablegesystem (202) nach einem der Ansprüche 1 bis 4, **dadurch gekennzeichnet, dass** die Welle (100) zumindest abschnittsweise eine Hohlwelle ist mit einem ersten in axialer Richtung verlaufenden Kanal (109), der in radialer Richtung mit einem Innenraum (126) der Andruckrolle (5) verbunden ist, zum Zuführen eines Fluids in den Innenraum (126) und einem zweiten in axialer Richtung verlaufenden Kanal (110), der in radialer Richtung mit dem Innenraum (126) der Andruckrolle (5) verbunden ist, zum Abführen eines Fluids aus dem Innenraum (126).

6. Ablegesystem (202) nach Anspruch 5, **dadurch gekennzeichnet, dass** die Andruckrolle (5) einen Fluidkanal aufweist mit einem ersten radialen Abschnitt, der sich von dem ersten Kanal (109) der Welle (100) radial nach außen zu einer Innenfläche des Mantels erstreckt, mit mindestens einem axialen Abschnitt, der sich von einem radial außenliegenden Ende des ersten radialen Abschnitts axial erstreckt, wobei die Innenfläche des Mantels eine Wand des axialen Abschnitts bildet, und mit mindestens einem zweiten radialen Abschnitt, der sich von der Innenfläche des Mantels radial nach Innen zu dem zweiten Kanal (110) der Welle (100) erstreckt.

7. Ablegesystem (202) nach Anspruch 6, **dadurch gekennzeichnet, dass** die Andruckrolle (5) einen sich radial von der Welle (100) nach außen erstreckenden Kern (103) aufweist, der gegen die Welle (100) gedichtet ist und der mindestens einen sich radial nach außen ersteckenden Durchbruch (117) aufweist, der zumindest einen Teil des ersten radialen Abschnitts des Fluidkanals bildet und der mit dem ersten Kanal (109) der Welle (100) verbunden ist.

8. Ablegesystem (202) nach Anspruch 7, **dadurch gekennzeichnet, dass** die Andruckrolle (5) einen zu dem Mantel (101) konzentrischen, radial nach Innen von dem Mantel (101) beanstandeten Kühlring (104) aufweist, wobei der Kühlring (104) mindestens einen sich radial erstreckenden ersten Durchbruch (119) aufweist und der Kühlring (104) derart gegen den Kern (103) gedichtet ist, das der sich radial erstreckende erste Durchbruch (117) des Kerns (103) und der sich radial erstreckende Durchbruch (119) des Kühlrings (104) zusammen den ersten radialen Abschnitt des Fluidkanals bilden.

9. Ablegesystem (202) nach Anspruch 8, **dadurch gekennzeichnet, dass** der Kühlring (104) mindestens einen sich radial erstreckenden zweiten Durchbruch (123) aufweist, der in ein erstes Volumen (124) mündet, das von dem Kern (103) einerseits und einem ersten Abstandshalter (102a) andererseits begrenzt wird und das mit dem zweiten Kanal (110) der Welle (100) verbunden ist.

10. Ablegesystem (202) nach einem der Ansprüche 7 bis 9, **dadurch gekennzeichnet, dass** der Kern (103) in axialer Richtung derart angeordnet ist, dass zwei axiale Abschnitte des Fluidkanals gebildet werden und der Kühlring (104) mindestens einen zweiten radialen Durchbruch (123) aufweist, der in ein zweites Volumen (125) mündet, das von dem Kern (103) einerseits und einem zweiten Abstandshalter (102b) andererseits begrenzt wird.

11. Ablegesystem (202) nach einem der Ansprüche 1 bis 10, **dadurch gekennzeichnet, dass** es ein Heizsystem (7) aufweist, das derart eingerichtet ist, dass es im Betrieb des Systems das Halbzeug vor oder im Bereich der Andruckrolle (5) erwärmt.

## Claims

1. Depositing system (202) for depositing a web-like semi-finished product with a pressure roller (5) for depositing the web-like semi-finished product (1) with
a shaft (100) for rotatable mounting of the pressure roller (5),
a hollow-cylindrical casing (101) elastically deformable at least in sections and
two spacers (102a, 102b) extending radially outwards from the shaft (100),
wherein the casing (101) is held by the spacers (102a, 102b) at a distance from the shaft (100) such that the casing (101) extends between the spacers (102a, 102b) and concentrically around the shaft (100), so that the spacers (102a, 102b) form the bases of the hollow cylinder formed by the casing (101), and the casing (101) and the spacers (102a, 102b) delimit an inner space (108) of the pressure roller (5),
wherein the casing (101) is made of sheet metal, and the casing (101) has a casing surface (105) which forms the pressing surface of the pressure roller (5),
**characterized in that** the casing (101) has at each of its first and second ends (111) in axial direction a flange (106a, 106b) extending radially inwards, wherein each of the flanges (106a, 106b) is connected to a spacer (102a, 102b) respectively.

2. Depositing system (202) according to claim 1, **characterized in that** the casing (101) has a wall thickness in a range from 0.1 mm to 2 mm, preferably in a range from 0.25 mm to 1 mm and particularly preferably of 0.4 mm.

3. Depositing system (202) according to one of claims 1 or 2, **characterized in that** a stop element is provided radially in the direction of the shaft (100) at a distance from the casing (101), which forms a stop for the elastic deformation of the casing.

4. Depositing system (202) according to claim 3, **characterized in that** the spacer (102a, 102b) is at a radial distance from the casing (101) in a range from 0.5 mm to 5 mm and preferably of 1 mm.

5. Depositing system (202) according to one of claims 1 to 4, **characterized in that** the shaft (100) is a hollow shaft at least in sections with a first channel (109) running in axial direction, which is connected to an inner space (126) of the pressure roller (5) in radial direction, for supplying a fluid into the inner space (126), and a second channel (110) running in axial direction, which is connected to the inner space (126) of the pressure roller (5) in radial direction, for removing a fluid from the inner space (126).

6. Depositing system (202) according to claim 5, **characterized in that** the pressure roller (5) has a fluid channel with a first radial section which extends radially outwards from the first channel (109) of the shaft (100) to an inner surface of the casing, with at least one axial section which extends axially from a radially exterior end of the first radial section, wherein the inner surface of the casing forms a wall of the axial section, and with at least one second radial section which extends radially inwards from the inner surface of the casing to the second channel (110) of the shaft (100).

7. Depositing system (202) according to claim 6, **characterized in that** the pressure roller (5) has a core (103) extending radially outwards from the shaft (100), which is sealed against the shaft (100) and which has at least one opening (117) extending radially outwards which forms at least one part of the first radial section of the fluid channel and which is connected to the first channel (109) of the shaft (100).

8. Depositing system (202) according to claim 7, **characterized in that** the pressure roller (5) has a cooling ring (104) concentric to the casing (101) at a radial distance inwards from the casing (101), wherein the cooling ring (104) has at least one radially extending first opening (119), and the cooling ring (104) is sealed against the core (103) such that the radially extending first opening (117) of the core (103) and the radially extending opening (119) of the cooling ring (104) together form the first radial section of the fluid channel.

9. Depositing system (202) according to claim 8, **characterized in that** the cooling ring (104) has at least one radially extending second opening (123) which opens into a first volume (124) which is delimited by the core (103) on the one hand and a first spacer (102a) on the other hand and which is connected to the second channel (110) of the shaft (100).

10. Depositing system (202) according to one of claims 7 to 9, **characterized in that** the core (103) is arranged in axial direction such that two axial sections of the fluid channel are formed and the cooling ring (104) has at least one second radial opening (123) which opens into a second volume (125) which is delimited by the core (103) on the one hand and a second spacer (102b) on the other hand.

11. Depositing system (202) according to one of claims 1 to 10, **characterized in that** it has a heating system (7) which is set up such that it heats the semi-finished product before or the area of the pressure roller (5) during operation.

## Revendications

1. Système (202) destiné à déposer un demi-produit en forme de bande avec un rouleau presseur (5) pour déposer le demi-produit (1) en forme de bande, avec
un axe (100) pour un support à rotation du rouleau presseur (5),
une enveloppe (101) en forme de cylindre creux au moins partiellement élastique et
deux espaceurs (102a, 102b) s'étendant radialement vers l'extérieur à partir de l'axe (100),
l'enveloppe (101) étant maintenue par les espaceurs (102a, 102b) à une distance telle de l'axe (100) que l'enveloppe (101) s'étend entre les espaceurs (102a, 102b) et de manière concentrique autour de l'axe (100), si bien que les espaceurs (102a, 102b) forment les surfaces de couvercle du cylindre creux formées par l'enveloppe (101) et les espaceurs (102a, 102b) délimitent un volume intérieur (108) du rouleau presseur (5),
l'enveloppe (101) étant fabriquée en une tôle métallique et l'enveloppe (101) présentant une surface d'enveloppe (105) qui constitue la surface d'appui du rouleau presseur (5),
**caractérisé en ce que** l'enveloppe (101) comprend à ses première et deuxième extrémités (111), vu dans la direction axiale, un rebord respectif (106a, 106b) s'étendant radialement vers l'intérieur, chacun des rebords (106a, 106b) étant relié respectivement à un espaceur (102a, 102b).

2. Système pour déposer (202) selon la revendication 1, **caractérisé en ce que** l'enveloppe (101) présente une épaisseur de paroi dans une plage de 0,1 mm à 2 mm, de préférence dans une plage de 0,25 mm à 1 mm et de manière particulièrement préférée de 0,4 mm.

3. Système pour déposer (202) selon la revendication 1 ou 2, **caractérisé en ce que**, en direction de l'axe (100), radialement espacé de l'enveloppe (101), il est prévu un élément de butée qui constitue une butée pour une déformation élastique de l'enveloppe.

4. Système pour déposer (202) selon la revendication 3, **caractérisé en ce que** l'espaceur (102a, 102b) présente un espacement radial de l'enveloppe (101) dans une plage de 0,5 mm à 5 mm et de préférence de 1 mm.

5. Système pour déposer (202) selon l'une des revendications 1 à 4, **caractérisé en ce que** l'axe (100) est au moins partiellement un axe creux avec un premier canal (109) s'étendant dans la direction axiale et qui est relié dans la direction radiale à un volume intérieur (126) du rouleau presseur (5) pour emmener un fluide dans le volume intérieur (126), et avec un deuxième canal (110) s'étendant dans la direction axiale et qui est relié dans la direction radiale au volume intérieur (126) du rouleau presseur (5) pour évacuer un fluide du volume intérieur (126).

6. Système pour déposer (202) selon la revendication 5, **caractérisé en ce que** le rouleau presseur (5) comprend un canal pour fluide avec une première zone radiale qui s'étend du premier canal (109) de l'axe (100) radialement vers l'extérieur vers une surface intérieure de l'enveloppe, avec au moins une zone axiale qui s'étend axialement à partir d'une extrémité radialement extérieure de la première zone radiale, la surface intérieure de l'enveloppe formant une paroi de la zone axiale, et avec au moins une deuxième zone radiale qui s'étend à partir de la surface intérieure de l'enveloppe radialement vers l'intérieur vers le deuxième canal (110) de l'axe (100).

7. Système pour déposer (202) selon la revendication 6, **caractérisé en ce que** le rouleau presseur (5) comprend un noyau (103) s'étendant à partir de l'axe (100) radialement vers l'extérieur, qui est rendu étanche par rapport à l'axe (100) et qui comprend au moins un passage (117) s'étendant radialement vers l'extérieur, qui forme au moins une partie de la première zone radiale du canal pour fluide et est relié au premier canal (109) de l'axe (100).

8. Système pour déposer (202) selon la revendication 7, **caractérisé en ce que** le rouleau presseur (5) comprend un anneau de refroidissement (104) concentrique par rapport à l'enveloppe (101) et espacé de l'enveloppe (101) radialement vers l'intérieur, l'anneau de refroidissement (104) comprenant au moins un premier passage (119) s'étendant radialement et l'anneau de refroidissement (104) étant rendu étanche par rapport au noyau (103) d'une manière telle que le premier passage (117) du noyau (103), s'étendant radialement, et le passage (119) de l'anneau de refroidissement (104), s'étendant radialement, constituent ensemble la première zone radiale du canal pour fluide.

9. Système pour déposer (202) selon la revendication 8, **caractérisé en ce que** l'anneau de refroidissement (104) comprend au moins un deuxième passage (123) s'étendant radialement qui débouche dans un premier volume (124) qui est délimité par le noyau (103) d'une part et par un premier espaceur (102a) d'autre part et qui est relié au deuxième canal (110) de l'axe (100).

10. Système pour déposer (202) selon l'une des revendications 7 à 9, **caractérisé en ce que** le noyau (103) est disposé dans la direction axiale de façon telle que deux zones axiales du canal pour fluide soient formées et que l'anneau de refroidissement (104) comprenne au moins un deuxième passage (123) radial qui débouche dans un deuxième volume (125) qui est délimité par le noyau (103) d'une part et par un deuxième espaceur (102b) d'autre part.

11. Système pour déposer (202) selon l'une des revendications 1 à 10, **caractérisé en ce qu'**il comprend un système de chauffage (7) qui est agencé de façon que, lors du fonctionnement du système, il chauffe le demi-produit avant ou aux alentours du rouleau presseur (5).
